# EUROPEAN PATENT SPECIFICATION

(11) **EP 1 200 226 B1**
(45) Date of publication and mention of the grant of the patent: **23.07.2003**
(21) Application number: 00940570.5
(22) Date of filing: 19.06.2000
(51) Int. Cl.: B23K 35/363

(54) **SOLDERING FLUX**
WEICHLÖTFLUSSMITTEL
FLUX DE BRASAGE

(30) Priority: 17.06.1999 GB 9914192
(43) Date of publication of application: 02.05.2002
(73) Proprietor: Alpha Fry Limited, Woking, Surrey GU21 5RZ (GB)
(72) Inventor: SAMEJA, Ashraf, Ibrahim, London SW16 2BA (GB); INGHAM, Anthony, Ellis, London W4 3LH (GB)
(74) Representative: Allard, Susan Joyce
(86) International application number: GB0002383
(87) International publication number: WO00078496

(56) References cited:
- EP-A- 0 610 031
- GB-A- 1 553 069
- US-A- 3 540 943
- DATABASE WPI Week 198722 Derwent Publications Ltd., London, GB; AN 1987-155906 XP002150807 & SU 1 263 478 A (UNIV ODESS), 15 October 1986 (1986-10-15)
- DATABASE COMPENDEX [Online] ENGINEERING INFORMATION, INC., NEW YORK, NY, US; EIX90060165562, 1989 TAKEMOTO TADASHI ET AL: "Investigation of aluminum soldering fluxes by a surface tension method" XP002150806

## Description

This invention is concerned with soldering fluxes, particularly with soldering fluxes which are useful for soldering the radiators of motor vehicles and heat exchanger assemblies in general.

Various soldering procedures are used in the manufacture of car radiators and heat exchanger assemblies. One of these is the baking procedure which involves clamping an assembly of solder coated tubes and other radiator components in a jig, spraying with flux or dipping the assembly in flux and baking the assembly in an oven. This procedure requires the assembly to remain in the oven at elevated temperature usually for several minutes. The oven temperature may be anything from 250 to 470°C but is more likely to be in the range 280 to 400°C. During this procedure the solder will melt and flow into the crevices in the joints of the assembly thereby providing the necessary bonding. Another.soldering process used in these industries is end-dipping and this also involves exposure to high temperature.

The flux used in these soldering processes must therefore have a sufficiently long high temperature life to ensure that it will provide sufficient protection to the surfaces to be joined until the radiator has attained a temperature sufficient to melt the solder and thereby permit bonding. Other desirable properties of fluxes are that they should produce low levels of char and residue and of course have a good fluxing efficiency.

Examples of fluxes which have previously been developed for such uses are described in British Patent Nos. 1517116 and 1553069 and in European Patent No. 610031. GB-A-1517116 discloses a soldering flux which comprises an aqueous solution containing a mixture of 25 to 75% by weight of hydrobromide of an aliphatic hydroxyamine and 75 to 25% by weight of a hydrobromide of an aliphatic amine. GB-A-1553069 is a development of this which describes and claims a flux which comprises an aqueous solution containing a mixture of diethanolamine hydrobromide and ethylamine hydrobromide together with ammonium bromide. EP-A-610031 is a further development which discloses a non-chelating soldering flux which comprises an aqueous solution containing one or more hydrohalides or hydrophosphates of guanidine, substituted guanidine or a five-membered nitrogen containing heterocyclic amine and one or more hydrohalides or hydrophosphates of aliphatic amines.

Other fluxes used in soldering copper and brass surfaces in heat exchangers use zinc chloride and zinc bromide, often in combination with some ammonium chloride, ammonium bromide, hydrochloric or hydrobromic acid.

The solders which are currently used in this field are alloys of tin and lead. However, there is now a considerable demand for the use of solders which are free from lead. Consequently, there is some experimentation with the use of lead-free alloys in this area. Examples of such lead-free alloys include alloys of tin and copper.

However, there are problems with the use of lead-free solder in conjunction with the soldering fluxes known in the art. These problems are particularly noticeable when a baking procedure such as that described above for the production of radiators and heat exchanger assemblies is used. The first problem is that there is a tendency for precipitates to build up quickly in the flux tank into which the assembly is dipped prior to baking. Analysis of the precipitates indicates that they comprise tin and oxygen and/or bromine. The formation of such precipitates is undesirable and may also be related to the second problem. The second problem is that, when soldering is complete, a white staining develops on the surfaces of the soldered product either immediately or within 24 hours of the soldering operation. This deposit is believed to be a complex of tin and hydroxide and/or bromide ions. Again the deposit is undesirable and its formation represents a disadvantage of the use of presently known soldering fluxes.

SU-A-1 263 478 discloses a composition used for preparing surfaces of Fe-Ni-Cr alloys, stainless stells etc. for brazing with low melting point solders. The composition contains hydroxylamine hydrochloride, ammonium tetrafluoroborate and water.

The applicants have carried out extensive laboratory testing in order to discover compositions which can be used as fluxes for lead-free solders and which reduce the rate of formation of precipitate and which reduce the staining of the soldered product and which do not compromise the performance of the flux in terms of its fluxing efficiency and high temperature life. Initial experiments using conventional corrosion inhibitors such as urea, thiourea, 2-phenyl-2-thiourea, 2-mercapto-benzothioazole, 2-mercapto-benzoimidazole, dibenzyl sulphoxide, thiosemicarbazide, 6-methoxypurin, 5-phenyltetrazole, benzotriazole and dimethyl acetylenedicarboxylate (DMAD) proved unsuccessful. Finally it was discovered that the precipitation of tin salts could be delayed by the addition of certain fluorine-containing compounds to a conventional flux. Addition of such compounds was also found to reduce the staining of the soldered products and to provide fluxes with fluxing efficiencies as good as and sometimes better than those known in the art.

Accordingly, the present invention provides a soldering flux composition which comprises:
(i) zinc bromide and/or one or more amine hydrohalides and/or one or more amine hydrophosphates selected from hydrohalides and/or hydrophosphates of aliphatic monoamines, aliphatic diamines, hydroxyamines of the formula HO(CH₂₎ₙ NH₂ where n is from 1 to 8, monobasic amino acids, 5-membered nitrogen-containing heterocyclic rings substituted by at least one amine group, guanidine (H₂NC(N=H)NH₂), substituted guanidines, and amidoamines in an amount of from 30 to 99.5 wt% based on the total weight of components (i) and (ii); and
(ii) one or more fluorine-containing compounds selected from fluoroboric acid (HBF₄), ammonium fluoroborate (NH₄BF₄), lithium fluoroborate (LiBF₄), sodium fluoroborate (NaBF₄) and potassium fluoroborate (KBF₄) in an amount of from 70 to 0.5 wt% based on the total weight of components (i) and (ii); and
(iii)water in an amount not less than that required to solvate components (i) and (ii).

Preferably, component (i) is present in an amount of from 60 to 95 wt% based on the total weight of components (i) and (ii) and component (ii) is present in an amount of from 40 to 5 wt% based on the total weight of components (i) and (ii).

More preferably, component (i) is present in an amount of from 70 to 95 wt% based on the total weight of components (i) and (ii) and component (ii) is present in an amount of from 30 to 5 wt% based on the total weight of components (i) and (ii).

Even more preferably, component (i) is present in an amount of from 90 to 95 wt% based on the total weight of components (i) and (ii) and component (ii) is present in an amount of from 10 to 5 wt% based on the total weight of components (i) and (ii).

Preferred amine hydrohalides and/or hydrophosphates may be selected from hydrohalides and/or hydrophosphates of:
(a) aliphatic monoamines of the formula CH₃(CH₂)ₙNH₂ where n is from 1 to 7, such as ethylamine and propylamine; and/or
(b) aliphatic diamines of the formula H₂N(CH₂)ₙNH₂ where n is from 1 to 8, such as 1,2-diaminoethane, 1,5-diaminopentane, and 1,6-diaminohexane; and/or
(c) hydroxyamines of the formula HO(CH₂)ₙNH₂ where n is from 1 to 8, such as ethanolamine, or of the formula (HO(CH₂)ₙ)₂NH where n is from 1 to 8, such as diethanolamine; and/or
(d) monobasic amino acids, such as beta-alanine and valine;
(e) 5-membered nitrogen-containing heterocyclic rings substituted by at least one amine group, such as 5-aminotetrazole and 3-amino-1,2,4-triazole; and/or
(f) guanidine (H₂NC(N=H)NH₂) or a substituted guanidine having one or more H atoms substituted by CH₃(CH₂)ₙ where n is from 1 to 8; and/or
(g) amidoamines, such as urea.

Preferably, when component (i) comprises amine hydrohalides they are amine hydrobromides.

It will be appreciated by a person skilled in the art that, although the relative concentrations of the compounds which make up components (i) and (ii) may only vary within the ranges specified above, the total concentration of these compounds, when dissolved in component (iii), i.e. water, may vary considerably within the scope of the invention. In other words, the amount of water present may vary from one composition of the invention to another depending upon the strength of flux required for a particular job. The flux composition of the present invention will commonly be supplied as a concentrated solution and the user may use it as received. However, more commonly the user will dilute it with water prior to use. The final concentration will depend on the type of process for which the flux is to be used, the temperature-time profile of the heating ovens, and the type and age of the radiator materials, for example tubes or fins.

The scope of the present invention is thus not limited by the total concentration of components (i) and (ii) in the flux composition. However, the total concentration of component (ii) may typically vary in the range of from 0.1 to 5.0 wt% based on the total weight of the flux. By way of example, a concentrated, or "strong", flux composition may comprise a total concentration of component (ii) in an amount of from 0.5 to 5 wt% based on the total weight of the flux. A dilute, or "weak", flux composition may comprise a total concentration of component (ii) in an amount of from 0.1 to 0.5 wt% based on the total weight of the flux.

The compositions of the present invention may also contain an ammonium halide in an amount of up to 400% by weight, preferably up to 150% by weight, based on the total weight of component (i). Preferably the ammonium halide is ammonium bromide.

The compositions of the present invention may also comprise free hydrohalic acid and/or phosphoric acid. That is to say, the compositions may comprise hydrohalic acid and/or phosphoric acid in an amount in excess of that required to ensure that all amine compounds are present as amine hydrobromides or amine hydrophosphates. The hydrohalic acid and/or phosphoric acid may preferably be present in an amount of up to 800% by weight based on the total weight of component (i). When a hydrohalic acid is present it is preferably hydrobromic acid, in which case it is preferably added as a 48% aqueous solution.

The compositions of the present invention may also contain one or more wetting agents and/or corrosion inhibitors. Examples of suitable corrosion inhibitors are benzotriazole and imidazole. Typically, the wetting agent(s) and/or corrosion inhibitor(s) may each be present in an amount of up to 10% by weight, more preferably up to 5% by weight, even more preferably approximately 3% by weight, based on the total weight of components (i) and (ii).

In another aspect, the present invention also provides for the use of one or more compounds selected from fluoroboric acid, ammonium fluoroborate, lithium fluoroborate, sodium fluoroborate and potassium fluoroborate, in a soldering flux composition for the purpose of delaying the formation of undesirable precipitates therein.

The present invention will be further described by the following examples which are intended to illustrate but not to limit, the scope of the present invention.

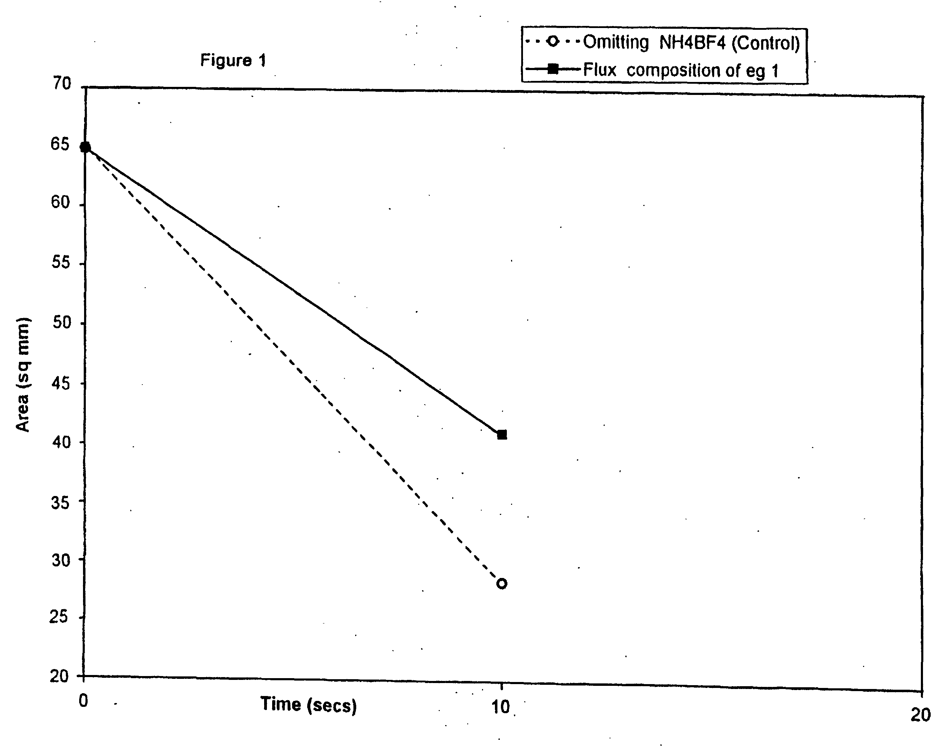

Within the examples (example 7) reference is made to figure 1 which illustrates the high temperature life and fluxing efficiency of compositions of the present invention compared to those known in the art.

### Example 1

A soldering flux according to the present invention was produced containing the following components:

| Material | Amount (g) |
|---|---|
| HBr | 7.9 |
| Guanidine Hydrobromide | 8.7 |
| Monoethylamine Hydrobromide | 11.6 |
| Ammonium Bromide | 3.5 |
| Ammonium Fluoroborate | 1.9 |
| Wetting Agents | 0.8 |
| Water | 65.5 |

The compounds making up component (i) are present in an amount of 91.5 wt% (i.e. guanidine hydrobromide (39.2 wt%) and monoethylamine hydrobromide (52.3 wt%)) based upon the total weight of components (i) and (ii). The compound making up component (ii) is present in an amount of 8.6 wt% (i.e. ammonium tetrafluoroborate (8.6 wt%)) based upon the total weight of components (i) and (ii).

The compound making up component (ii) is present in an amount of 1.9 wt% based upon the total weight of the flux, thus this flux falls into the "strong" category.

### Example 2

A soldering flux according to the present invention was produced by mixing the following components:

| Material | Amount (g) |
|---|---|
| Zinc bromide | 310 |
| Ammonium bromide | 210 |
| 48% hydrobromic acid | 21 |
| Ammonium flouroborate | 18 |
| Wetting agents | 5 |
| Water | 436 |

### Example 3

A first flux composition was prepared as in example 1 above. A second flux composition was prepared as in example 1 above but omitting the ammonium tetrafluoroborate. Both fluxes were diluted one part flux to ten parts water. 500ml of each flux was placed in separate beakers. Into each beaker was immersed a copper strip or strips to a total weight of 17g and tin wire of weight 50g. The tin and copper were touching to allow any possible galvanic action to occur. The solutions were observed and it was recorded that, after 3 days immersion, the second flux composition containing no ammonium tetrafluoroborate had developed a white haze. After the same period of time the first flux composition remained clear. After 5 days immersion the haze in the second flux composition had developed to form a cloudy mixture with a distinct yellowish-white precipitate. After 5 days the first flux composition remained clear and continued to remain clear for a further 10 days before the development of a precipitate was observed.

### Example 4

A first flux composition was prepared as in example 1 above. A second flux composition was prepared as in example 1 above but omitting the ammonium tetrafluoroborate. Both fluxes were diluted one part flux to ten parts water. A number of copper and tin samples were prepared with the two metals clipped to each other. One sample was immersed in each of the two flux compositions for a period of 20mins. After 20 mins immersion the two copper/tin samples were removed and each was replaced with a fresh sample. After 20 mins immersion these samples were also removed and replaced. This example mimics to some extent an industrial dipping process. After 160mins (8 samples) the second flux composition had become cloudy and a whitish precipitate had begun to develop. After the same amount of time and samples the first flux solution remained clear. The test was continued with the first flux only and it still remained clear after 1000mins (50 samples).

### Example 5

The method of example 3 was repeated using as a first flux a composition prepared as in example 2 above. A second flux composition was prepared as in example 2 above but omitting the ammonium tetrafluoroborate. After 16hrs the second flux composition had turned cloudy. The first flux composition remained clear for 90hrs.

### Example 6

A flux composition was prepared as in Example 1 above. Further flux compositions were prepared as in Example 1 above with the ammonium fluoroborate being replaced with various different chemicals in an amount of 2wt% based on the total weight of the flux. A control composition was also prepared as in Example 1 above but excluding the ammonium fluoroborate. The resultant compositions were then diluted with 1 part water to 1 part flux. Metal test-pieces were made by winding "lead-free" solder (97Sn/3Pb) in the form of a wire (20cm long and 2.5mm diameter) around copper foil (0.5mm thickness, 5cm wide and 10cm long). A testpiece was then immersed in each of the fluxes and the appearance of the fluxes was monitored daily to identify when a precipitate appeared. The table below indicates with a cross the day upon which contamination of each flux with precipitate was observed (the flux containing ammonium fluoroborate remained clear after 10 days).

| Chemical tested at 2% w/w of flux | Number of Days | | | | | | | | | |
|---|---|---|---|---|---|---|---|---|---|---|
| | 1 | 2 | 3 | 4 | 5 | 6 | 7 | 8 | 9 | 10 |
| No additive (control) | | | | × | | | | | | |
| Ammonium fluoroborate | | | | | | | | | | |
| Sodium fluoroborate | | | | | | | | × | | |
| Potassium fluoroborate | | | | | | | | | | × |
| Fluoroboric acid (48% sol) | | | | | | | | × | | |

### Example 7

A first flux composition was prepared as in example I above. A second flux composition was prepared as in example 1 above but omitting the ammonium tetrafluoroborate. Both fluxes were diluted one part flux to ten parts water. In order to demonstrate the fluxing efficiency of the fluxes "spread tests" were carried out as follows. A copper test-plate is placed on the surface of a molten bath of solder (temperature = 350°C). A drop of flux is placed on the copper test-plate and, after a period of time, a small pellet of solder of a certain mass is placed on the spot where the flux was dropped. The solder pellet melts and spreads out on the test-plate. The test-plate is then removed from the molten bath and allowed to cool so that the solder solidifies. The area of the test-plate which has been covered by solder is then measured. A larger area indicates a more efficient flux. Figure 1 shows a plot of the spread area for both fluxes for different time periods before deposition of the pellet. The plot indicates that the flux of the present invention has a fluxing efficiency at least as good as that of the known control composition. It also indicates that the high-temperature life of the flux of the present invention is better than that of the known control composition with a smaller decrease in fluxing efficiency occurring as the time period before deposition of the pellet is increased.

### Example 8

Flux solutions of the present invention were used in an oven baking process to solder the components of a number of radiators. A flux of the composition given in example 1 was prepared. It was diluted with water in the ratio of 1 part flux to 10 parts water. Each radiator core was immersed in flux, withdrawn and excess flux drained from it. The fluxed radiator cores were then passed through a tunnel oven and baked at 320°C. The passage through the oven took between 4 and 7 minutes depending on the size of the core. A flux composition of example 1 was prepared. It was diluted with water in the ratio of 1 part flux to 2 parts water. The resulting flux solution was used in a process to solder tank plates to tubes. The parts of the radiator to be soldered by this process were coated with flux by dipping, and then immersed in solder at 365°C for 30-45 seconds. At the end of a week's production the flux tanks used in these processes remained clear, and the radiators produced were clean and showed no occurrence of staining.

Thus, it can be seen that the compositions of the present invention provide fluxes which increase the time taken for undesirable precipitates to appear therein and which do not result in undesirable staining of the soldered product and which maintain fluxing efficiencies and high temperature lifetimes at least as good as compositions known in the art.

## Claims

1. A soldering flux composition which comprises:
(i) zinc bromide and/or one or more amine hydrohalides and/or one or more amine hydrophosphates selected from hydrohalides and/or hydrophosphates of aliphatic monoamines, aliphatic diamines, hydroxyamines of the formula HO(CH₂)ₙNH₂ where n is from 1 to 8, monobasic amino acids, 5-membered nitrogen-containing heterocyclic rings substituted by at least one amine group, guanidine (H₂NC(N=H)NH₂), substituted guanidines, and amidoamines in an amount of from 30 to 99.5 wt% based on the total weight of components (i) and (ii); and
(ii) one or more fluorine-containing compounds selected from fluoroboric acid, ammonium fluoroborate, lithium fluoroborate, sodium fluoroborate and potassium fluoroborate in an amount of from 70 to 0.5 wt% based on the total weight of components (i) and (ii); and
(iii)water in an amount not less than that required to solvate components (i) and (ii).

2. A soldering flux composition as claimed in claim 1 wherein component (i) is present in an amount of from 60 to 95 wt% based on the total weight of components (i) and (ii) and component (ii) is present in an amount of from 40 to 5 wt% based on the total weight of components (i) and (ii).

3. A soldering flux composition as claimed in claim 1 or claim 2 wherein component (i) is present in an amount of from 70 to 95 wt% based on the total weight of components (i) and (ii) and component (ii) is present in an amount of from 30 to 5 wt% based on the total weight of components (i) and (ii).

4. A soldering flux composition as claimed in any one of the preceding claims wherein component (i) is present in an amount of from 90 to 95 wt% based on the total weight of components (i) and (ii) and component (ii) is present in an amount of from 10 to 5 wt% based on the total weight of components (i) and (ii).

5. A soldering flux composition as claimed in any one of the preceding claims wherein component (i) comprises amine hydrohalides and/or amine hydrophosphates selected from hydrohalides and/or hydrophosphates of ethylamine, propylamine, 1,2-diaminoethane, 1,5-diaminopentane, 1,6-diaminohexane, ethanolamine, diethanolamine, beta-alanine, valine, 5-aminotetrazole, 3-amino-1,2,4-triazole, guanidine and urea.

6. A soldering flux composition as claimed in any one of the preceding claims wherein component (i) comprises amine hydrobromides.

7. A soldering flux composition as claimed in any one of the preceding claims wherein the concentration of component (ii) is in the range of from 0.1 to 5.0 wt% based on the total weight of the flux.

8. A soldering flux composition as claimed in any one of the preceding claims wherein the concentration of component (ii) is in the range of from 0.5 to 5 wt% based on the total weight of the flux.

9. A soldering flux composition as claimed in any one of the preceding claims wherein the concentration of component (ii) is in the range of from 0.1 to 0.5 wt% based on the total weight of the flux.

10. A soldering flux composition as claimed in any one of the preceding claims wherein an ammonium halide is present in an amount of up to 400% by weight based on the total weight of component (i) .

11. A soldering flux composition as claimed in any one of the preceding claims wherein an ammonium halide is present in an amount of up to 150% by weight based on the total weight of component (i) .

12. A soldering flux composition as claimed in claim 10 or 11 wherein the ammonium halide is ammonium bromide.

13. A soldering flux composition as claimed in any one of the preceding claims which additionally comprises a hydrohalic acid and/or phosphoric acid in an amount of up to 800% by weight based on the total weight of component (i).

14. A soldering flux composition as claimed in claim 13 wherein the hydrohalic acid is hydrobromic acid.

15. A soldering flux composition as claimed in any one of the preceding claims which additionally comprises one or more wetting agents and/or corrosion inhibitors.

16. A soldering flux composition as claimed in claim 15 wherein the one or more corrosion inhibitors is/are selected from benzotriazole, and imidazole.

17. A soldering flux composition as claimed in claim 15 or claim 16 wherein the wetting agent(s) and/or corrosion inhibitor(s) are each present in an amount of up to 10% by weight based on the total weight of components (i) and (ii).

18. Use of one or more compounds selected from fluoroboric acid, ammonium fluoroborate, lithium fluoroborate, sodium fluoroborate and potassium fluoroborate, in a soldering flux composition to delay the formation of undesirable precipitates therein when said soldering flux composition is used in a soldering process which employs lead-free alloy as the solder.

19. Use as claimed in claim 18 wherein the lead-free alloy employed as the solder is an alloy of tin and copper.

## Patentansprüche

1. Lötflussmittel-Zusammensetzung, welche folgendes enthält:
(i) Zinkbromid und/oder ein oder mehrere Aminhalogenid-Wasserstoffverbindungen und/oder ein oder mehrere Aminhydrophosphate, die aus der Gruppe der Halogenid-Wasserstoffverbindungen und/oder Hydrophosphate aliphatischer Monoamine, aliphatischer Diamine, Hydroxyamine der allgemeinen Formel HO(CH₂)ₙNH₂, wobei n eine Zahl von 1 bis 8 ist, der einbasische Aminosäuren, der 5-gliedrige stickstoffhaltigen heterozyklischen Ringe, die durch mindestens eine Amingruppe substituiert sind, Guanidin (H₂NC(N=H)NH₂), der substituierten Guanidine und Amidoamine ausgewählt sind, in einer Menge von 30 bis 99,5 Gew.-%, bezogen auf das Gesamtgewicht der Komponenten (i) und (ii); und
(ii) eine oder mehrere fluorhaltige Verbindungen, die aus der Gruppe ausgewählt sind, die aus Fluorborsäure, Ammoniumfluorborat, Lithiumfluorborat, Natriumfluorborat und Kaliumfluorborat besteht, in einer Menge von 70 bis 0,5 Gew.-%, bezogen auf das Gesamtgewicht der Komponenten (i) und (ii); und
(iii) Wasser in einer Menge, die mindestens so groß ist wie die Menge, die zur Solvatisierung der Verbindungen (i) und (ii) benötigt wird.

2. Lötflussmittel-Zusammensetzung nach Anspruch 1, bei welcher die Komponente (i) in einer Menge von 60 bis 95 Gew.-%, bezogen auf das Gesamtgewicht der Komponenten (i) und (ii), vorhanden ist, und die Komponente (ii) in einer Menge von 30 bis 5 Gew.-%, bezogen auf das Gesamtgewicht der Komponenten (i) und (ii), vorhanden ist.

3. Lötflussmittel-Zusammensetzung nach Anspruch 1 oder 2, bei welcher die Komponente (i) in einer Menge von 70 bis 95 Gew.-%, bezogen auf das Gesamtgewicht der Komponenten (i) und (ii), vorhanden ist, und die Komponente (ii) in einer Menge von 40 bis 5 Gew.-%, bezogen auf das Gesamtgewicht der Komponenten (i) und (ii), vorhanden ist.

4. Lötflussmittel-Zusammensetzung nach einem der vorhergehenden Ansprüche, bei welcher die Komponente (i) in einer Menge von 90 bis 95 Gew.-%, bezogen auf das Gesamtgewicht der Komponenten (i) und (ii), vorhanden ist, und die Komponente (ii) in einer Menge von 10 bis 5 Gew.-%, bezogen auf das Gesamtgewicht der Komponenten (i) und (ii), vorhanden ist.

5. Lötflussmittel-Zusammensetzung nach einem der vorhergehenden Ansprüche, bei welcher die Komponente (i) Aminhalogenid-Wasserstoffverbindungen und/oder Aminhydrophosphate enthält, die aus der Gruppe ausgewählt sind, die aus Halogenid-Wasserstoffverbindungen und/oder Hydrophosphaten von Ethylamin, Propylamin, 1,2-Diaminoethan, 1,5-Diaminopentan, 1,6-Diaminohexan, Ethanolamin, Diethanolamin, Beta-Alanin, Valin, 5-Aminotetrazol, 3-Amino-1,2,4-Triazol, Guanidin und Harnstoff besteht.

6. Lötflussmittel-Zusammensetzung nach einem der vorhergehenden Ansprüche, bei welcher die Komponente (i) Aminhydrobromide enthält.

7. Lötflussmittel-Zusammensetzung nach einem der vorhergehenden Ansprüche, bei welcher die Konzentration der Komponente (ii) im Bereich von 0,1 bis 5,0 Gew.-%, bezogen auf das Gesamtgewicht des Flussmittels, beträgt.

8. Lötflussmittel-Zusammensetzung nach einem der vorhergehenden Ansprüche, bei welcher die Konzentration der Komponente (ii) im Bereich von 0,5 bis 5 Gew.-%, bezogen auf das Gesamtgewicht des Flussmittels, beträgt.

9. Lötflussmittel-Zusammensetzung nach einem der vorhergehenden Ansprüche, bei welcher die Konzentration der Komponente (ii) im Bereich von 0,1 bis 0,5 Gew.-%, bezogen auf das Gesamtgewicht des Flussmittels, beträgt.

10. Lötflussmittel-Zusammensetzung nach einem der vorhergehenden Ansprüche, bei welcher ein Ammoniumhalogenid in einer Menge von bis zu 400 Gew.-%, bezogen auf das Gesamtgewicht der Komponente (i), vorhanden ist.

11. Lötflussmittel-Zusammensetzung nach einem der vorhergehenden Ansprüche, bei welcher ein Ammoniumhalogenid in einer Menge von bis zu 150 Gew.-%, bezogen auf das Gesamtgewicht der Komponente (i), vorhanden ist.

12. Lötflussmittel-Zusammensetzung nach Anspruch 10 oder 11, bei welcher das Ammoniumhalogenid Ammoniumbromid ist.

13. Lötflussmittel-Zusammensetzung nach einem der vorhergehenden Ansprüche, welche zusätzlich eine Halogenwasserstoffsäure und/oder Phosphorsäure in einer Menge von bis zu 800 Gew.-%, bezogen auf das Gesamtgewicht der Komponente (i), enthält.

14. Lötflussmittel-Zusammensetzung nach Anspruch 13, bei welcher die Halogenwasserstoffsäure Bromwasserstoffsäure ist.

15. Lötflussmittel-Zusammensetzung nach einem der vorhergehenden Ansprüche, welche zusätzlich ein oder mehrere Netzmittel und/oder Korrosionsschutzmittel enthält.

16. Lötflussmittel-Zusammensetzung nach Anspruch 15, bei welcher der eine oder die mehreren Korrosionsschutzmittel aus der aus Benzotriazol und Imidazol bestehenden Gruppe ausgewählt sind.

17. Lötflussmittel-Zusammensetzung nach Anspruch 15 oder Anspruch 16, bei welcher das bzw. die Netzmittel und/oder der bzw. die Korrosionsschutzmittel jeweils in einer Menge von bis zu 10 Gew.-%, bezogen auf das Gesamtgewicht der Komponenten (i) und (ii), vorhanden sind.

18. Verwendung einer oder mehrerer Verbindungen, die aus der Gruppe ausgewählt sind, die aus Fluorborsäure, Ammoniumfluorborat, Lithiumfluorborat, Natriumfluorborat und Kaliumfluorborat besteht, in einer Lötflussmittel-Zusammensetzung zur Verzögerung der Bildung unerwünschter Ausfällungen darin, wenn die Lötflussmittel-Zusammensetzung in einem Lötvorgang eingesetzt wird, bei der eine bleifreie Legierung als Lot zum Einsatz kommt.

19. Verwendung nach Anspruch 18, bei welcher die als Lot verwendete bleifreie Legierung eine Legierung als Zinn und Kupfer ist.

## Revendications

1. Composition de flux de brasage qui comprend :
(i) du bromure de zinc et/ou un ou plusieurs halogénhydrates d'amines et/ou un ou plusieurs hydrophosphates d'amines, choisis parmi des halogénhydrates et/ou hydrophosphates de monoamines aliphatiques, de diamines aliphatiques, d'hydroxyamines de formule HO (CH₂)ₙNH₂ dans laquelle n a une valeur de 1 à 8, d'aminoacides monobasiques, de noyaux hétérocycliques azotés pentagonaux substitués avec au moins un groupe amine, de guanidine (H₂NC(N=H)NH₂), de guanidines substituées, et d'amidoamines en une quantité de 30 à 99,5% en poids sur la base du poids total des constituants (i) et (ii) ; et
(ii) un ou plusieurs composés contenant du fluor choisis entre l'acide fluoroborique, le fluoroborate d'ammonium, le fluoroborate de lithium, le fluoroborate de sodium et le fluoroborate de potassium en une quantité de 70 à 0,5% en poids sur la base du poids total des constituants (i) et (ii) ; et
(iii) de l'eau en une quantité non inférieure à la quantité requise pour la solvatation des constituants (i) et (ii).

2. Composition de flux de brasage suivant la revendication 1, dans laquelle le constituant est présent en une quantité de 60 à 95% en poids sur la base du poids total des constituants (i) et (ii) et le constituant (ii) est présent en une quantité de 40 à 5% en poids sur la base du poids total des constituants (i) et (ii).

3. Composition de flux de brasage suivant la revendication 1 ou la revendication 2, dans lequel le constituant (i) est présent en une quantité de 70 à 95% en poids sur la base du poids total des constituants (i) et (ii) et le constituant (ii) est présent en une quantité de 30 à 5% en poids sur la base du poids total des constituants (i) et (ii).

4. Composition de flux de brasage suivant l'une quelconque des revendications précédentes, dans laquelle le constituant (i) est présent en une quantité de 90 à 95% en poids sur la base du poids total des composants (i) et (ii) et le constituant (ii) est présent en une quantité de 10 à 5% en poids sur la base du poids total des constituants (i) et (ii).

5. Composition de flux de brasage suivant l'une quelconque des revendications précédentes, dans lequel le constituant (i) comprend des halogénhydrates d'amine et/ou hydrophosphates d'amines choisis parmi des halogénhydrates et/ou des hydrophosphates d'éthylamine, de propylamine, de 1,2-diaminoéthane, de 1,5-diaminopentane, de 1,6-diaminohexane, d'éthanolamine, de diethanolamine, de β-alanine, de valine, de 5-aminotétrazole, de 3-amino-1,2,4-triazole, de guanidine et d'urée.

6. Composition de flux de brasage suivant l'une quelconque des revendications précédentes, dans laquelle le constituant (i) comprend des bromhydrates d'amines.

7. Composition de flux de brasage suivant l'une quelconque des revendications précédentes, dans laquelle la concentration du constituant (ii) est comprise dans l'intervalle de 0,1 à 5,0% en poids sur la base du poids total du flux.

8. Composition de flux de brasage suivant l'une quelconque des revendications précédentes, dans laquelle la concentration du constituant (ii) est comprise dans l'intervalle de 0,5 à 5% en poids sur la base du poids total du flux.

9. Composition de flux de brasage suivant l'une quelconque des revendications précédentes, dans laquelle la concentration du constituant (ii) est comprise dans l'intervalle de 0,1 à 0,5% en poids sur la base du poids total du flux.

10. Composition de flux de brasage suivant l'une quelconque des revendications précédentes, dans laquelle un halogénure d'ammonium est présent en une quantité allant jusqu'à 400% en poids sur la base du poids total du constituant (i).

11. Composition de flux de brasage suivant l'une quelconque des revendications précédentes, dans laquelle un halogénure d'ammonium est présent en une quantité allant jusqu'à 150% en poids sur la base du poids total du constituant (i).

12. Composition de flux de brasage suivant la revendication 10 ou 11, dans laquelle l'halogénure d'ammonium est le bromure d'ammonium.

13. Composition de flux de brasage suivant l'une quelconque des revendications précédentes, qui comprend en outre un acide halogénhydrique et/ou de l'acide phosphorique en une quantité allant jusqu'à 800% en poids sur la base du poids total du constituant (i).

14. Composition de flux de brasage suivant la revendication 13, dans laquelle l'acide halogénhydrique est l'acide bromhydrique.

15. Composition de flux de brasage suivant l'une quelconque des revendications précédentes, qui comprend en outre un ou plusieurs agents mouillants et/ou inhibiteurs de corrosion.

16. Composition de flux de brasage suivant la revendication 15, dans laquelle le ou les inhibiteurs de corrosion sont choisis entre le benzotriazole et l'imidazole.

17. Composition de flux de brasage suivant la revendication 15 ou la revendication 16, dans laquelle le ou les agents mouillants et/ou inhibiteurs de corrosion sont chacun présents en une quantité allant jusqu'à 10% en poids sur la base du poids total des constituants (i) et (ii).

18. Utilisation d'un ou plusieurs composés choisis entre l'acide fluoroborique, le fluoroborate d'ammonium, le fluoroborate de lithium, le fluoroborate de sodium et le fluoroborate de potassium dans une composition de flux de brasage pour retarder la formation de précipités indésirables dans cette composition lorsque ladite composition de flux de brasage est utilisée dans un procédé de brasage qui utilise un alliage sans plomb comme brasure.

19. Utilisation suivant la revendication 18, dans laquelle l'alliage sans plomb utilisé comme brasure est un alliage d'étain et de cuivre.
